# FASCICULE DE BREVET EUROPEEN

(11) **EP 1 462 236 B1**
(45) Date de publication et mention de la délivrance du brevet: **21.03.2012**
(21) Numéro de dépôt: 04290265.0
(22) Date de dépôt: 02.02.2004
(51) Int. Cl.: B29C 51/16, B29C 51/30, B65D 5/48, B65D 5/22, B65D 5/20, B65D 5/56

(54) **Perfectionnements aux emballages en un matériau semi-rigide, à l'intérieur desquels est thermoformée une pellicule de protection en matière plastique**
Verbesserungen für halbsteife Verpackungen in deren Innenraum sich eine thermogeformte Plastikschutzhülle befindet
Improvements for semi-rigid containers having a thermoformed plastic sleeve in their interior

(30) Priorité: 28.03.2003 FR 0303860
(43) Date de publication de la demande: 29.09.2004
(73) Titulaire: SMURFIT KAPPA FRANCE, 94160 Saint Mande (FR)
(72) Inventeur: Roman, Patrick, 33230 Les Peintures (FR)
(74) Mandataire: Roger, Walter

(56) Documents cités:
- US-A- 2 961 143
- US-A- 4 555 381
- US-A- 4 779 758

## Description

La présente invention concerne des perfectionnements apportés aux emballages en un matériau semi-rigide tel que le carton ou le carton ondulé, à l'intérieur desquels est thermoformée une pellicule de protection en matière plastique.

Des emballages de ce type sont bien connus dans la technique (voir FR-A-1 515 444, EP-A-072 742 et EP-A-0 192 537) et ils sont destinés, en particulier, au conditionnement de denrées alimentaires, susceptibles d'exsuder des liquides, que la pellicule en matière plastique, imperméable aux gaz et aux liquides, empêche d'atteindre le carton ou le carton ondulé de l'emballage.

Lorsque cet emballage comporte un ou des rebords plats, à sa partie supérieure, la pellicule de matière plastique recouvre ces rebords et il est ainsi possible, après remplissage de l'emballage, de souder un opercule sur cette pellicule, en vue de protéger parfaitement les produits conditionnés.

Depuis de nombreuses années, de tels emballages connaissent un vif succès et la Demanderesse, en particulier, a proposé toute une gamme d'emballages de ce type, commercialisés sous la marque PUR-T.

Il s'avère toutefois difficile de réaliser économiquement dans ces emballages des cloisons ou des compartiments pour y loger, à l'intérieur d'un même emballage, en les séparant, des articles distincts, ou diverses portions d'une même denrée, ou encore des assortiments de produits différents, et l'on recherche depuis longtemps dans la technique un moyen simple et facile à mettre en oeuvre pour résoudre ce problème.

EP-A-072 742, déjà cité, expose diverses solutions déjà connues dans la technique antérieure et les problèmes rencontrés, et on y propose de ménager dans la partie de fond en carton des fentes dont les bords sont décalés par déformation du carton et immobilisés ainsi par la matière plastique. Il est clair, cependant, si l'on se réfère aux dessins de ce document, que l'on n'obtient que des parties de fond légèrement décalées les unes par rapport aux autres et non de véritables compartiments.

US 2,961,143 décrit un flan dont le fond est perforé.

La présente invention vise à proposer un procédé permettant de réaliser de véritables cloisons à l'intérieur des emballages évoqués ci-dessus, ces cloisons pourront servir à séparer des articles ou des lots d'articles conditionnés ou pouvant également servir de supports à des articles de grandes dimensions, qui reposent alors sur les arêtes de ces cloisons.

La Demanderesse a, en effet, établi qu'en pratiquant des orifices dans le fond en carton ou carton ondulé de l'emballage et en y introduisant des picots qui font saillie à l'intérieur de l'emballage, avant de procéder au thermoformage de la pellicule plastique, il est possible, en choisissant judicieusement les dimensions des orifices du fond et celles des picots, ainsi que les intervalles séparant ces derniers, de réaliser entre les différents picots un voile continu enveloppant ces picots et qui, après solidification de la matière plastique et retrait des picots, forme une cloison continue à l'intérieur de l'emballage, en saillie au-dessus de la pellicule recouvrant le fond.

L'invention a par conséquent pour premier objet un procédé de fabrication d'un emballage en un matériau semi-rigide tel que le carton ou le carton ondulé, dont l'intérieur est protégé par une pellicule de matière thermoplastique, dans lequel, après mise en forme de l'emballage en matériau semi-rigide, on thermoforme à l'intérieur de celui-ci la pellicule de matière thermoplastique, ce procédé étant caractérisé en ce que, avant de procéder au thermoformage de la matière thermoplastique, des lignes de perforations ou de découpes ayant été préalablement pratiquées dans le fond de l'emballage, on engage dans ces perforations, depuis l'extérieur de l'emballage, des picots qui font saillie à l'intérieur de celui-ci de façon sensiblement perpendiculaire au fond, on procède au thermoformage de manière à envelopper la ou les lignes de picots d'un voile sensiblement continu de matière plastique, on laisse la matière plastique se solidifier, et l'on retire les picots de manière que le ou les voiles de matière plastique solidifiée forment une ou des cloisons à l'intérieur du conditionnement.

L'invention a également pour objet un emballage en un matériau semi-rigide comportant à l'intérieur une pellicule de protection en matière plastique thermoformée dont une ou des parties en saillie par rapport au fond forment une ou des cloisons internes, cet emballage ayant été réalisé par la mise en oeuvre du procédé défini ci-dessus.

L'invention a enfin pour objet un flan prédécoupé et refoulé en un matériau semi-rigide tel que le carton ou le carton ondulé, destiné à être utilisé dans le procédé conforme à l'invention, caractérisé en ce qu'une partie correspondant au fond de l'emballage issu de ce flan comporte des lignes de perforations ou de découpes dans lesquelles peuvent être engagés des picots lors de la mise en oeuvre du procédé défini ci-dessus.

Les perforations pratiquées dans le fond de l'emballage en carton sont visibles de l'extérieur, mais ceci ne pose aucun problème, puisque ces perforations sont obturées à l'intérieur par le film en matière thermoplastique et que, lorsque l'emballage plein est exposé en vente, il repose sur son fond, qui est ainsi dissimulé aux regards.

D'autres caractéristiques et avantages de l'invention ressortiront de la description détaillée qui va suivre d'une forme de mise en oeuvre de celle-ci. Le type d'emballage auquel s'applique l'invention peut bien entendu être quelconque et celui auquel on se référera ci-après n'a donc aucun caractère limitatif.

Dans cette description, on se référera aux dessins schématiques annexés, sur lesquels :
La figure 1 est une vue en perspective d'un emballage en carton ou en carton ondulé, auquel peut être appliqué le procédé conforme à l'invention ;
La figure 2 est une vue en perspective de l'emballage comportant des cloisons internes issues de celui de la figure 1, par mise en oeuvre du procédé selon l'invention ;
La figure 3 représente l'emballage de la figure 2, après mise en place d'un opercule en matière plastique ;
La figure 4 est une vue en plan du flan de carton ondulé prédécoupé et refoulé, dont est issu l'emballage de la figure 1 ;
La figure 5 est une vue analogue à la figure 4 d'un autre flan pour la mise en oeuvre du procédé de l'invention.

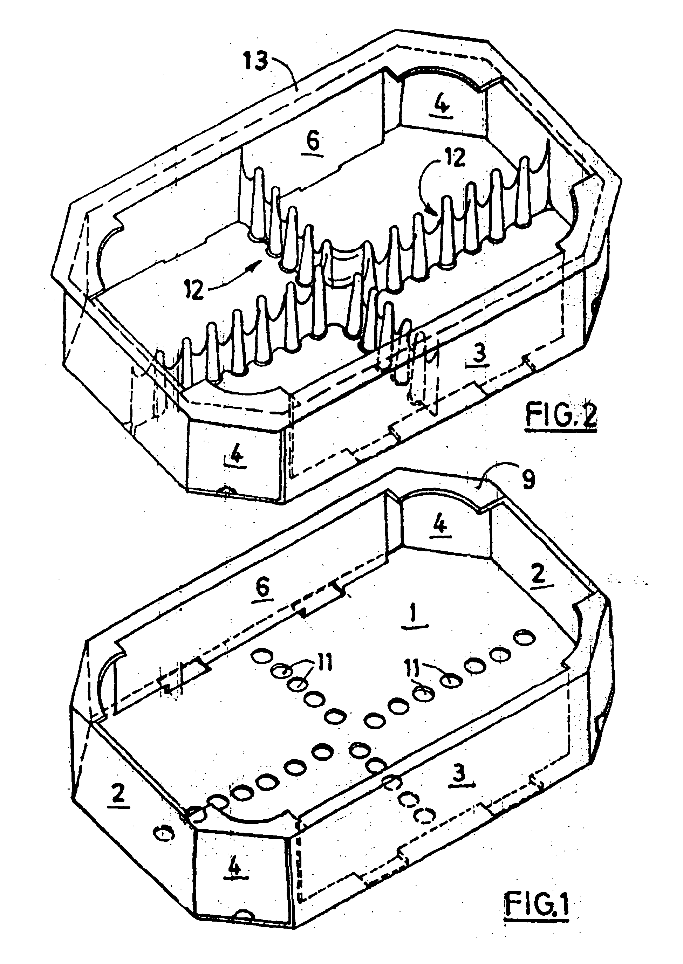

On se référera d'abord aux figures 1 à 4, qui illustrent la réalisation d'un emballage du type PUR-T évoqué ci-dessus, fabriqué par la Demanderesse.

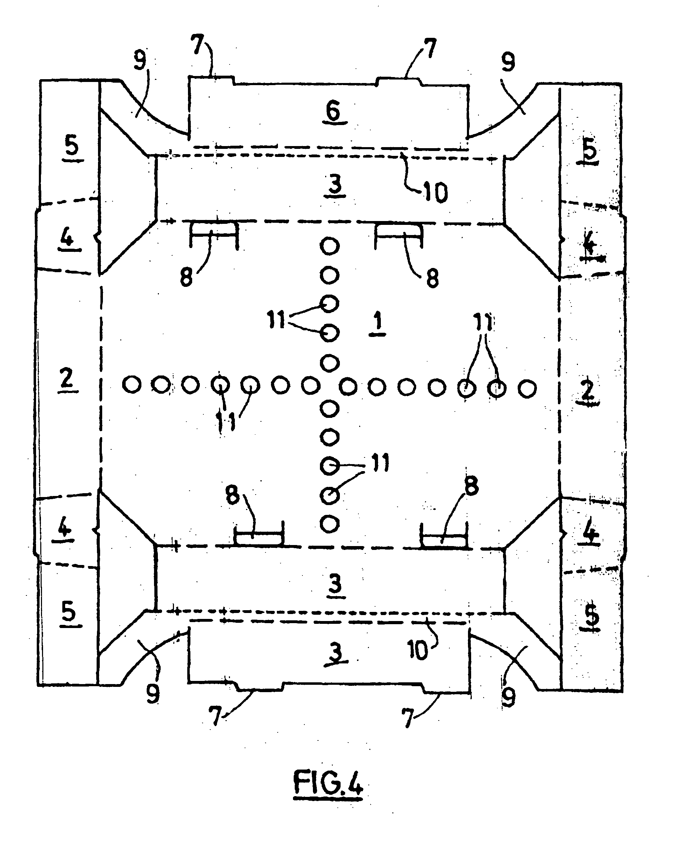

Cet emballage est réalisé par mise en forme du flan de carton ondulé prédécoupé et refoulé représenté sur la figure 4, et il comprend une partie de fond 1, sur laquelle sont articulées par des lignes de pliage parallèles deux parois longitudinales 2, deux parois transversales 3 perpendiculaires aux précédentes, et quatre parois 4 attenantes aux parois 2 et disposées obliquement entre celles-ci et les parois 3. Ces parois 4 se prolongent par des bandes 5, qui sont pincées entre les parois 3 et des panneaux 6, articulés par un double refoulage à la partie supérieure de ces parois 3 et rabattus vers l'intérieur de l'emballage, des languettes 7 faisant saillie à partir de ces panneaux 6 en direction du fond et étant engagées dans des découpes 8 de celui-ci, pour verrouiller l'emballage en carton ondulé en position montée.

Des bandes 9 prolongent obliquement les espaces 10 situés entre les deux refoulages ménagés à la partie supérieure des parois 3 et viennent se placer à l'horizontale à la partie supérieure des parois obliques 4. D'autres types de montage, utilisant par exemple des collages, peuvent naturellement être utilisés.

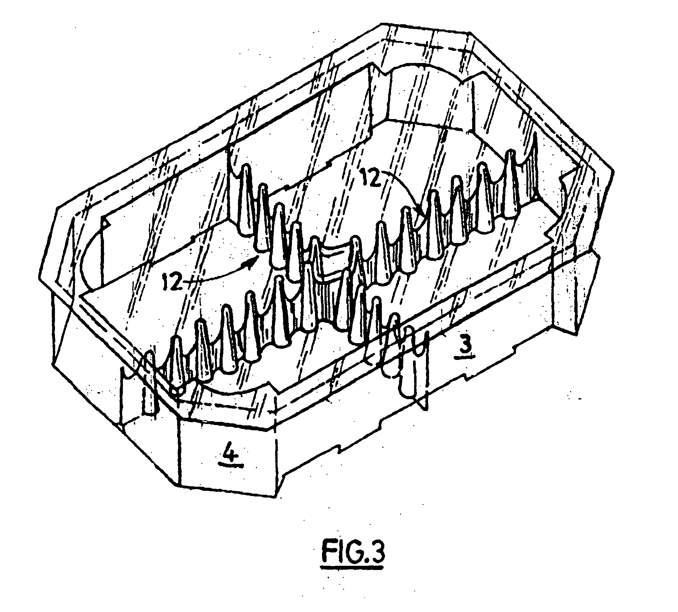

Après mise en forme de cet emballage en carton ondulé, une feuille de matière thermoplastique est habituellement thermoformée à l'intérieur de celui-ci et elle fait saillie en 13 à la partie supérieure des parois 2 à 4, ici à l'intérieur et à l'extérieur de celle-ci, pour former une assise parallèle au fond 1, sur laquelle peut être soudé un opercule de protection en matière plastique, qui apparaît sur la figure 3.

Conformément à l'invention, toutefois, des rangées de perforations 11, ici de forme circulaire, sont préalablement pratiquées dans le fond 1 en carton ondulé, pour y définir le profil de la base de cloisons destinées à diviser en divers compartiments l'intérieur de l'emballage. Pour réaliser ces cloisons, préalablement au thermoformage de la pellicule thermoplastique, on engage à partir de l'extérieur, dans les perforations 11, des picots qui viennent faire saillie à l'intérieur de l'emballage en carton ondulé et l'on effectue ensuite seulement le thermoformage de la pellicule thermoplastique.

En choisissant de façon judicieuse les dimensions et la forme des perforations et des picots et leur espacement, ce qui est à la portée du spécialiste de la technique considérée, la pellicule thermoformée forme un ou des voiles continus, qui enserrent les picots et font saillie à l'intérieur de l'emballage, à partir des perforations 11. Après refroidissement et retrait des picots, comme on le voit sur la figure 2, ces voiles continus forment des cloisons 12, qui, dans le cas des figures 1 à 4, sont perpendiculaires aux cloisons 2 et 3 et divisent l'emballage en quatre compartiments, dans lesquels peuvent être logés quatre articles identiques ou différents, par exemple quatre fromages, ou encore des lots d'articles différents, par exemple de gâteaux ou autres accompagnements pour apéritifs, etc....

Après mise en place des denrées, produits ou lots d'articles à conditionner, on peut souder de façon usuelle un opercule en matière plastique sur le rebord 13 de l'emballage, pour protéger les produits conditionnés de l'atmosphère ambiante.

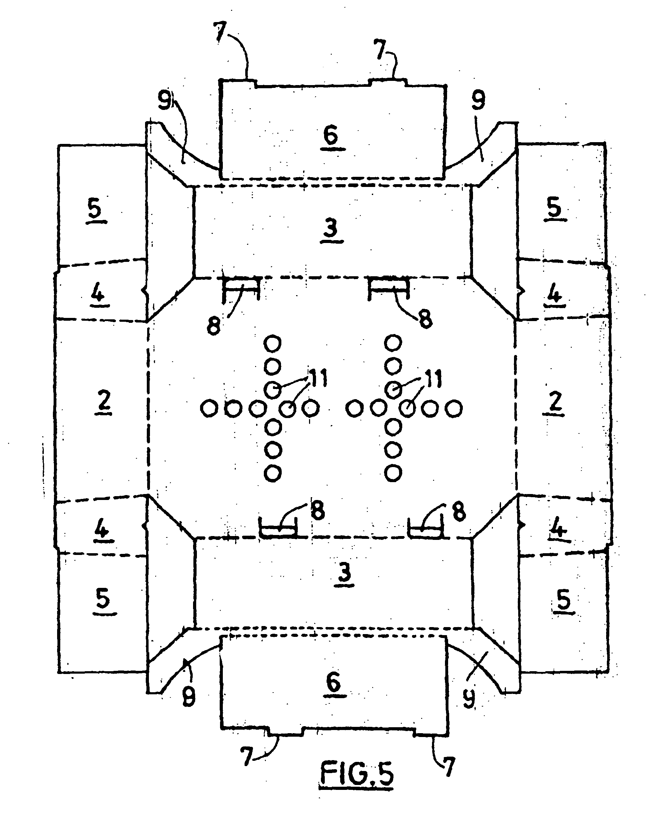

Les lignes de perforations 11 pratiquées dans le fond 1 peuvent être absolument quelconques, en fonction du nombre et de la forme des compartiments souhaités à l'intérieur de l'emballage conforme à l'invention. C'est ainsi que, dans le cas de la figure 5, où les organes déjà décrits sont désignés par les mêmes chiffres de référence, deux séries en forme de croix de perforations 11, ménagées dans le flan du carton ondulé prédécoupé et refoulé qui est représenté, donnent naissance, dans l'emballage qui en est issu, à six compartiments distincts.

L'invention apporte donc un moyen particulièrement simple et facile à mettre en oeuvre, qui ne nécessite pas l'adjonction de composants ou de matériau additionnels, pour réaliser des cloisons à l'intérieur d'un emballage en carton ou en carton ondulé, comportant une couche interne en une matière plastique thermoformée.

## Revendications

1. Procédé de fabrication d'un emballage en un matériau semi-rigide tel que le carton ou le carton ondulé, dont l'intérieur est protégé par une pellicule de matière thermoplastique, dans lequel, après mise en forme de l'emballage en matériau semi-rigide, on thermoforme à l'intérieur de celui-ci la pellicule de matière thermoplastique, ce procédé étant **caractérisé en ce que**, avant de procéder au thermoformage de la matière thermoplastique, des lignes de perforations (11) ou de découpes ayant été préalablement pratiquées dans le fond (1) de l'emballage, on engage dans ces perforations, depuis l'extérieur de l'emballage, des picots qui font saillie à l'intérieur de celui-ci de façon sensiblement perpendiculaire au fond (1), on procède au thermoformage de manière à envelopper la ou les lignes de picots d'un voile sensiblement continu de matière plastique, on laisse la matière plastique se solidifier, et l'on retire les picots, de manière que le ou les voiles de matière plastique solidifiée forment une ou des cloisons (12) à l'intérieur du conditionnement.

2. Emballage en un matériau semi-rigide, comportant à l'intérieur une pellicule de protection en matière plastique thermoformée, dont une ou des parties en saillie par rapport au fond (1) forment une ou des cloisons internes (12), cet emballage ayant été réalisé par la mise en oeuvre du procédé selon la revendication 1.

3. Flan prédécoupé et refoulé en un matériau semi-rigide tel que le carton ou le carton ondulé, destiné à être utilisé dans le procédé selon la revendication 1, **caractérisé en ce qu'**une partie correspondant au fond (1) de l'emballage issu de ce flan comporte des lignes de perforations (11) ou de découpes, dans lesquelles peuvent être engagés des picots lors de la mise en oeuvre du procédé selon la revendication 1, les lignes de perforation ou de découpes étant disposées de sorte qu'après engagement de picots dans chacune des lignes de perforations ou de découpes, thermoformage et refroidissement, des cloisons en matière plastique sont formées aux emplacements des lignes de perforations ou de découpes.

## Claims

1. A Method for manufacturing a pack made of a semi-rigid material such as cardboard or corrugated cardboard, the interior of which is protected by a film of thermoplastic, wherein, after the pack made of semi-rigid material has been made up, the film of thermoplastic is thermoformed inside it, this method being **characterized in that**, before the thermoplastic is thermoformed, lines of perforations (11) or cuts having been made beforehand in the base (1) of the pack, spikes are inserted into these perforations from outside the pack, said spikes projecting into the interior thereof in a manner substantially perpendicular to the base (1), thermoforming is then carried out so as to envelop the line or lines of spikes with a substantially continuous coating of plastic, the plastic is allowed to solidify, and the spikes are withdrawn such that the coating or coatings of solidified plastic form one or more partitions (12) inside the packaging.

2. Pack made of a semi-rigid material, comprising on the inside a protective film of thermoformed plastic, of which a part or parts that project from the base (1) form one or more internal partitions (12), this pack having been produced by implementing the method according to Claim 1.

3. Precut and scored blank made of a semi-rigid material such as cardboard or corrugated cardboard, intended to be used in the method according to Claim 1, **characterized in that** a part corresponding to the base (1) of the pack produced from this blank comprises lines of perforations (11) or cuts, into which there may be inserted spikes during the implementation of the method according to Claim 1, the lines of perforations or cuts being disposed such that, after the insertion of spikes into each of the lines of perforations or cuts, thermoforming and cooling, partitions made of plastic are formed at the locations of the lines of perforations or cuts.

## Patentansprüche

1. Verfahren zur Herstellung einer Verpackung aus einem halbsteifen Material wie z.B. Pappe oder Wellpappe, deren inneres durch einen Film aus einem thermoplastischen Material geschützt ist,
wobei, nachdem die Verpackung aus halbsteifem Material in Form gebracht wurde, der Film aus thermoplastischem Material durch Thermoformen in deren Inneren gebildet wird,
wobei das Verfahren **dadurch gekennzeichnet ist, dass** vor der Durchführung der Thermoformung des thermoplastischen Materials Perforations- oder Aussparungslinien (11), im Voraus in dem Boden (1) der Verpackung gebildet worden sind, in diese Perforationen, von dem Äußeren der Verpackung aus Noppen eingeführt werden, die im Wesentlichen senkrecht zu dem Boden (1) in deren Inneres vorspringen,
zum Thermoformen in der Weise übergegangen wird, dass die Noppenlinie oder -linien umhüllt werden von einer im Wesentlichen durchgehenden Umhüllung aus plastischem Material,
das plastische Material erstarren gelassen wird, und die Noppen zurückgezogen werden, so dass die Umhüllung oder Umhüllungen aus erstarrtem plastischen Material eine oder mehrere Zwischenwände (12) im Inneren der Packung bilden.

2. Verpackung aus einem halbsteifen Material, die im Inneren einen Schutzfilm aus thermoformiertem thermoplastischen Material enthält, von dem ein Abschnitt oder Abschnitte, die von dem Boden (1) aus vorspringen, eine oder mehrere interne Zwischenwände (12) bilden,
wobei diese Verpackung durch Durchführen des Verfahrens gemäß Anspruch 1 verwirklicht wurde.

3. Vorgeschnittener und genuteter Zuschnitt aus einem halbsteifen Material wie z.B. Pappe oder Wellpappe, der dazu bestimmt ist, in dem Verfahren gemäß Anspruch 1 verwendet zu werden,
**dadurch gekennzeichnet, dass**
ein Abschnitt, der dem Boden (1) der Verpackung entspricht, die aus diesem Zuschnitt hervorgeht, Perforations-oder Aussparungslinien (11) enthält, in die während der Durchführung des Verfahrens gemäß Anspruch 1 die Noppen eingeführt werden können,
wobei die Perforations- oder Aussparungslinien so angeordnet sind, dass nach dem Einführen der Noppen in jede der Perforationslinien oder Aussparungen, der Thermoformung und der Abkühlung an den Stellen der Perforations- oder Aussparungslinien Zwischenwände aus plastischem Material gebildet sind.
